# EUROPEAN PATENT SPECIFICATION

(11) **EP 2 487 213 B1**
(45) Date of publication and mention of the grant of the patent: **20.04.2016**
(21) Application number: 10822156.5
(22) Date of filing: 12.10.2010
(51) Int. Cl.: C09D 201/06, C09D 4/02, C09D 5/00, C09D 5/24, C09D 7/12, C09D 175/04, C09D 175/16, H01B 1/20, H01B 5/14, H01B 13/00, C08G 18/48, C08G 18/76, C09D 175/08, C09D 175/14, C08K 5/43

(54) **CONDUCTIVE COATING FILM-FORMING AGENT, PRODUCTION METHOD FOR SAME, AND MOLDED ARTICLE USING SAME**
LEITFÄHIGES BESCHICHTUNGSFILM-BILDENDES MITTEL, HERSTELLUNGSVERFAHREN DAFÜR UND FORMARTIKEL DAMIT
AGENT DE FORMATION DE FILM DE REVÊTEMENT CONDUCTEUR, SON PROCÉDÉ DE PRODUCTION, ET ARTICLE MOULÉ UTILISANT CELUI-CI

(30) Priority: 09.10.2009 JP 2009235507
(43) Date of publication of application: 15.08.2012
(73) Proprietor: Mitsubishi Materials Electronic Chemicals Co., Ltd., Akita-shi Akita 010-8585 (JP)
(72) Inventor: SAKURABA Natsumi, Akita-shi Akita 010-8585 (JP); HONDA Tsunetoshi, Akita-shi Akita 010-8585 (JP); KAMIYA Takeshi, Akita-shi Akita 010-8585 (JP)
(74) Representative: Gille Hrabal
(86) International application number: PCT/JP2010/067870
(87) International publication number: WO 2011/043489

(56) References cited:
- JP-A- 2008 163 271
- JP-A- 2008 163 271
- JP-A- 2008 163 273
- JP-A- 2008 536 254
- JP-A- 2009 155 585
- JP-A- 2009 155 585
- JP-A- 2009 202 446

## Description

### TECHNICAL FIELD

The present invention relates to a conductive coating film-forming agent, a method for producing the same, and a molded article using the same.

This application claims priority on Japanese Patent Application No. 2009-235507 filed on October 9, 2009.

### BACKGROUND ART

There has hitherto been known a method in which a resin composition, imparted with conductivity by allowing a coating film-forming component composed of a resin or the like to contain an alkali metal salt such as lithium perchlorate, is applied, as an antistatic coating material, to a molded article, a film or a sheet of various synthetic resins to form a coating film, thereby preventing a surface of the molded article from being electrically charged.

However, the alkali metal salt such as lithium perchlorate had a problem in that it is difficult to prepare a uniform resin composition because of its poor solubility in a coating film-forming component composed of a resin or the like. In the case of dissolving the alkali metal salt such as lithium perchlorate in a polymerizable monomer, there was a problem in that heat is generated at the time of dissolution to cause initiation of polymerization of the monomer, and thus it is difficult to form a uniform coating film. Furthermore, in the case of using alcohols and an ether-based compound as a catalyst, special attention should be paid to handling because of the risk of heat generation and ignition.

Thus, there has recently been proposed a resin composition in which a coating film-forming component composed of a resin or the like is allowed to contain fluorine-based organic anion salts such as lithium bis(trifluoromethanesulfonyl)imide and lithium tris(trifluoromethanesulfonyl)methanoate, so as to impart conductivity (see, for example, Patent Literature 1). The patent literature discloses that the fluorine-based organic anion salts have high solubility in the coating film-forming component and are free from risk of heat generation and ignition at the time of dissolution in the solvent as compared with a conventional alkali metal salt such as lithium perchlorate, and thus they can impart conductivity to the coating film comparatively satisfactorily.

### [Citation List]

### [Patent Literature]

[Patent Literature 1] Japanese Unexamined Patent Application, First Publication No. 2003-41194
JP 2008-163271 discloses an electroconductivity-imparting agent comprising a bis(fluorosulfony)imide salt. The amount of fluorine ions in the bis(fluorosulfonyl)imide salt is not known.

### DISCLOSURE OF INVENTION

### [Technical Problem]

However, fluorine-based organic anion salts such as lithium bis(trifluoromethanesulfonyl)imide and lithium tris(trifluoromethanesulfonyl)methanoate described in Patent Literature 1 had a problem in that they were difficult to handle in the production process because of high hygroscopicity. In an organofluorine compound, there has been recent been concern about an influence such as environmental residue or bioaccumulation derived from a strong bond between carbon and fluorine on the environment. Furthermore, since the fluorine-based organic anion salts require high production costs and a large addition amount so as to impart conductivity, a more inexpensive conductivity imparting material has been desired.

Furthermore, a molded article, a film or a sheet of various synthetic resins in which a coating film is formed has recently been examined regarding use in in-vehicle applications and internal structures of electric appliances. Therefore, it has been desired to develop a conductive resin composition which causes neither deterioration of conductive performances due to bleeding in the use-environment at high temperature, nor deterioration of conductive performances due to long-term use.

The present invention has been made so as to solve the above-mentioned problems, and an object thereof is to provide a conductive coating film-forming agent which is easy to handle while maintaining solubility in the coating film-forming component, and exerts no influence on the environment and also has excellent conductivity even in the use-environment at high temperature and long-term use, a method for producing the same, and a molded article using the same.

### [Solution to Problem]

In order to achieve the above object, the present invention employs the following constitutions.
[1] A conductive coating film-forming agent includes:
   a coating film-forming component having a polyol structure, and
   at least one kind of a compound selected from bis(fluorosulfonyl)imide salts represented by the following formula (1):

      (FSO₂)₂N·X (1)

      wherein X in the formula (1) is any one kind of a cation selected from the group consisting of alkali metal, alkali earth metal, ammonium, phosphonium, alkylammonium and alkylsulfonium, and the amount of fluorine ions in the at least one kind of a compound selected from bis(fluorosulfonyl)imide salts represented by formula (1) is 100 ppm or less.
[2] The conductive coating film-forming agent according to the above item [1], wherein X represented by the formula (1) is any one kind of an element of Li, Na and K.
[3] The conductive coating film-forming agent according to the above item [1], wherein a ratio of the amount of fluorine ions to the amount of fluorine in bis(fluorosulfonyl)imide salts (amount of fluorine ions/amount of fluorine in bis(fluorosulfonyl)imide salts), in the conductive coating film-forming agent is from 1 × 10⁻⁵ to 1 × 10⁻³.
[4] The conductive coating film-forming agent according to the above item [1] or [2], wherein the content of fluorine ions in at least one kind of a compound selected from bis(fluorosulfonyl)imide salts represented by the formula (1) is 20 ppm or less.
[5] The conductive coating film-forming agent according to any one of the above items [1] to [4] , wherein the coating film-forming component having a polyol structure contains at least one kind of (meth)acrylate, urethane and urethane acrylate.
[6] The conductive coating film-forming agent according to any one of the above items [1] to [5] , wherein at least one kind of a compound selected from bis(fluorosulfonyl)imide salts represented by the formula (1) is contained in the amount of 0.01 to 30.0 parts by mass based on 100 parts by mass of the coating film-forming component having a polyol structure.
[7] A conductive coating film-forming agent which is obtained by diluting the conductive coating film-forming agent according to any one of the above items [1] to [6] with water or an organic solvent.
[8] A conductive coating film-forming agent in which the conductive coating film-forming agent according to any one of the above items [1] to [6] is added to a subsidiary component of one, or a combination of two or more kinds of the group consisting of water, an organic solvent, a polymerizable monomer, a prepolymer, an oligomer and a polymer.
[9] The conductive coating film-forming agent according to the above item [8], wherein the polymerizable monomer, prepolymer, oligomer or polymer is a thermosetting resin or a photocurable resin.
[10] The conductive coating film-forming agent according to the above item [1], which contains 10 to 70% by mass of the coating film-forming component and 0.001 to 21% by mass of the compound, and also contains, as subsidiary components, 0 to 89.9% by mass of an organic solvent, 0 to 89.9% by mass of water and 0.01 to 14% by mass of a polymerization initiator.
[11] A method for producing the conductive coating film-forming agent according to the above item [1], the method comprising:
   a step of preparing a neutralized solution by neutralizing an aqueous solution which includes at least one kind of bis(fluorosulfonyl)imide and fluorosulfuric acid with an aqueous alkali solution;
   a step of separating into a liquid phase in which at least one kind of a compound selected from bis(fluorosulfonyl)imide salts represented by the formula (1) is extracted in an organic solvent, and an aqueous phase, by adding an organic solvent to the neutralized solution;
   a step of removing the aqueous phase;
   a step of isolating at least one kind of a compound selected from bis(fluorosulfonyl)imide salts represented by the formula (1) by washing the extracted liquid phase by adding the water to the extracted liquid phase, thereby removing an acidic component in at least one kind of a compound selected from bis(fluorosulfonyl)imide salts represented by the formula (1), and a step of dissolving the at least one kind of a compound selected from bis(fluorosulfonyl)imide salts represented by the formula (1) in a coating film-forming component having a polyol structure, wherein, after the step of isolating, an aqueous solution containing 1% by mass of at least one kind of a compound selected from bis(fluorosulfonyl)imide salts represented by the formula (1) shows a pH of 5.0 or higher and lower than 6.0.
[12] The method for producing a conductive coating film-forming agent according to item [11], further comprising: a step of adding the obtained solution after the step of dissolving to one, or a combination of two or more kinds of water, an organic solvent, a polymerizable monomer, a prepolymer, an oligomer and a polymer.
[13] A molded article characterized in that a coating film made of the conductive coating film-forming agent according to any one of the above items [1] to [10] formed.
[14] A pressure-sensitive adhesive, wherein the conductive coating film-forming agent according to the above item [10] is used as a raw material.

### [Advantageous Effects of Invention]

According to the conductive coating film-forming agent of the present invention, it is possible to obtain a conductive coating film-forming agent in which cations are uniformly dispersed since at least one kind of a compound selected from bis(fluorosulfonyl)imide salts represented by the formula (1) is excellent in solubility in a coating film-forming component having a polyol structure. The conductive coating film-forming agent of the present invention is excellent in handling properties at the time of formation of a coating film and thus it becomes easy to handle since the bis(fluorosulfonyl)imide salts have low hygroscopicity. Furthermore, it is possible to provide a conductive coating film-forming agent which having a low impact in terms of environmental residue and bioaccumulation since the bis(fluorosulfonyl)imide salts are inorganic compounds having no carbon-fluorine bond.

According to the conductive coating film-forming agent of the present invention, it is possible to improve durability of conductivity when the content of fluorine ions in the bis(fluorosulfonyl)imide salts is 100 ppm or less. When the content of fluorine ions is 20 ppm or less, durability of conductivity is more excellent.

According to the method for producing a conductive coating film-forming agent of the present invention, it becomes easy to produce a conductive coating film-forming agent since at least one kind of a compound selected from bis(fluorosulfonyl)imide salts represented by the formula (1) is free from risk of heat generation and ignition. Whereby, it is possible to produce a conductive coating film-forming agent with satisfactory productivity.

According to a molded article using the conductive coating film-forming agent of the present invention, since the bis(fluorosulfonyl)imide salts have a high melting point, they do not leak out from a coating film even in the use-environment at high temperature, resulting in prevention of bleeding, and thus it is possible to obtain a molded article with a coating film having excellent conductivity formed thereon. When the content of fluorine ions in the bis(fluorosulfonyl)imide salts is 100 ppm or less, it is possible to obtain a molded article in which a coating film having excellent conductivity even in long-term use is formed.

### BEST MODE FOR CARRYING OUT THE INVENTION

The conductive coating film-forming agent of the present invention will be described in more detail below by way of embodiments.

The conductive coating film-forming agent of the present embodiment includes at least bis(fluorosulfonyl)imide salts and a coating film-forming component having a polyol structure The conductive coating film-forming agent of the present embodiment may contain subsidiary components such as water, an organic solvent, a polymerizable monomer, a prepolymer, an oligomer and a polymer, and other components such as a polymerization initiator (for example, photopolymerization initiator).

The conductive coating film-forming agent contains, as bis(fluorosulfonyl)imide salts, at least one kind of a compound selected from bis(fluorosulfonyl)imide salts represented by the following formula (1).

(FSO₂)₂N·X (1)

In the bis(fluorosulfonyl)imide salts represented by the formula (1), there is no particular limitation on a cation component X. For example, it is possible to apply any one kind of a cation selected from the group consisting of any one kind of a cation selected from the group consisting of alkali metal, alkali earth metal, ammonium, phosphonium, alkylammonium and alkylphosphonium. The cation component X in bis(fluorosulfonyl)imide salts of the present embodiment is particularly preferably at least one kind of an element of lithium (Li), sodium (Na) and potassium (K). That is, a bis(fluorosulfonyl)imide lithium salt, a bis(fluorosulfonyl)imide sodium salt and a bis(fluorosulfonyl)imide potassium salt are preferable for the following reason. Since these salts have a high melting point, when a conductive coating film-forming agent is formed into a coating film, the salts do not leak out from the coating film even in the case of using at high temperature, and thus the coating film has bleeding resistance.

In the present embodiment, bleeding resistance means a property in which, when a surface of a coating film is strongly wiped 20 times with a cloth made of cotton after heating at 100°C for 10 minutes, surface resistance of the surface of the coating film does not change before and after wiping.

In the present embodiment, the bis(fluorosulfonyl)imide salts represented by the formula (1) preferably contain less impurities such as fluorine ions. Specifically, the content of fluorine ions in the bis(fluorosulfonyl)imide salts represented by the formula (1) is preferably 100 ppm or less, and more preferably 20 ppm or less. The durability of conductivity can be improved by controlling the content of fluorine ions in the bis(fluorosulfonyl)imide salts represented by the formula (1) to 100 ppm or less. The content of fluorine ions in the bis(fluorosulfonyl)imide salts may be 1 ppm or more. This is because it is technically difficult to control the content of fluorine ions to less than 1 ppm, and also high costs are required and the effect of improving durability of conductivity does not largely change.

As used herein, ppm means ppm by mass.

At least one kind of a compound selected from bis(fluorosulfonyl)imide salts represented by the formula (1) to be used as a raw material of the conductive coating film-forming agent of the present embodiment contains, as impurities, acidic ions such as fluorine ions. Therefore, it is preferable to use, as the raw material of the conductive coating film-forming agent, a compound in which the pH of an aqueous solution containing 1% by mass of the compound is 5.0 or higher and lower than 6.0. When the pH is 5.0 or higher and lower than 6.0, the amount of bis(fluorosulfonyl)imide salts decomposed in the resin can be reduced, and thus durability of conductivity of the coating film can be enhanced. When the pH decreases to lower than 5.0, bis(fluorosulfonyl)imide salts are likely to be decomposed in the resin, thus causing deterioration of durability of the coating film and an increase in amount of fluorine ions.

Accordingly, a ratio of the amount of fluorine ions to the amount of fluorine in bis(fluorosulfonyl)imide salts (amount of fluorine ions/amount of fluorine in bis(fluorosulfonyl)imide salts), in the finally obtained conductive coating film-forming agent becomes 1 × 10⁻⁵ to 1 × 10⁻³, thus making it possible to improve the durability of the coating film. Even if the ratio of amount of fluorine ions to amount of fluorine in bis(fluorosulfonyl)imide salts is less than 1 × 10⁻⁵ or more than 1 × 10⁻³, durability of the coating film relatively deteriorates. However, the obtained conductive coating film-forming agent can be used. The ratio of the mount of fluorine ions to the mount of fluorine in bis(fluorosulfonyl)imide salts in the conductive coating film-forming agent is more preferably from 1 × 10⁻⁵ to 2 × 10⁻⁴. When the ratio is within the above range, durability of the coating film can be further enhanced. In order to measure the amount of fluorine ions in the conductive coating film-forming agent, the conductive coating film-forming agent may be diluted with water or stirred together with an aqueous phase to extract fluorine ions in the aqueous phase, followed by measurement of the amount of fluorine ions by ion chromatography. The amount of fluorine in bis(fluorosulfonyl)imide salts in the conductive coating film-forming agent can be determined from the content of the bis(fluorosulfonyl)imide salt in the conductive coating film-forming agent. The content of the bis(fluorosulfonyl)imide salt in the conductive coating film-forming agent may be measured using ¹⁹F-NMR or LC-MS.

As used herein, the content of fluorine ions in the bis(fluorosulfonyl)imide salts represented by the formula (1) means a value measured, for example, by an ion chromatographic method. Specifically, the measurement of the content of fluorine ions by the ion chromatographic method can be carried out in the following manner.

First, 0.5 g of a sample is dissolved in 50 mL of ion-exchange water to prepare a measurement sample. Next, the content of fluorine ions in the sample is measured, for example, by an ion chromatography system ICS-2000 (Column: IonPacAS19, detector: electric conductivity detector) manufactured by DIONEX Corporation, using a 20 mmol/L potassium hydroxide solution as an eluate (flow rate of 1.0 ml/min).

In the present embodiment, the content of fluorine ions in bis(fluorosulfonyl)imide salts represented by the formula (1) is calculated by a mass ratio of the mass of bis(fluorosulfonyl)imide salts represented by the formula (1) to be used as a raw material of the conductive coating film-forming agent to the measured mass of fluorine ions.

The coating film-forming component is a coating film-forming component having a polyol structure. It is particularly preferable that the coating film-forming component having a polyol structure contain at least one kind of (meth)acrylate, urethane and urethane acrylate. "(Meth)acrylate" is the general term for acrylate and methacrylate.

As used herein, the (meth)acrylate having a polyol structure means (meth)acrylate in which (meth)acrylic acid is bonded with polyetherpolyols, the urethane having a polyol structure means urethane in which diisocyanates are bonded with polyetherpolyols, and the urethane having a polyol structure acrylate means urethane in which (meth)acrylic acid is bonded at the molecular end of urethane.

Examples of the polyetherpolyols include polyoxyethylene glycol, polyoxypropylene glycol, a block copolymer of polyoxyethylene glycol and polyoxypropylene glycol and the like.

Examples of the diisocyanates include isophorone diisocyanate, hexamethylene diisocyanate, tolylene diisocyanate, xylene diisocyanate, diphenylmethane-4,4'-diisocyanate, dicyclopentanyl isocyanate and the like.

Examples of the acrylate to be bonded at the end of urethane in the urethane acrylate include pentaerythritol triacrylate, tetramethylolmethane triacrylate, butanediol monoacrylate, polyethylene glycol monoacrylate and the like.

It is possible to use other photopolymerizable monomers having a polyoxyalkylene chain in the (meth)acrylate having a polyol structure. Examples of other photopolymerizable monomers having a polyoxyalkylene chain include diethylene glycol di(meth)acrylate, triethylene glycol di(meth)acrylate, tetraethylene glycol di(meth)acrylate, hexaethylene glycol di(meth)acrylate, dipropylene glycol di(meth)acrylate, tripropylene glycol di(meth)acrylate, tetrapropylene glycol di(meth)acrylate, polytetramethylene glycol di(meth)acrylate and the like.

In the present embodiment, at least one kind of a compound selected from bis(fluorosulfonyl)imide salts represented by the formula (1) is preferably contained in the amount within a range from 0.01 to 30.0 parts by mass, more preferably from 0.05 to 20.0 parts by mass, and still more preferably from 0.1 to 10.0 parts by mass, based on 100 parts by mass of the coating film-forming component having a polyol structure contained in the conductive coating film-forming agent. In the case the amount of at least one kind of a compound selected from the bis(fluorosulfonyl)imide salts is less than 0.01 part by mass, the effect of conductivity cannot be sufficiently obtained, and therefore, is not preferable. In contrast, in the case the amount is more than 30.0 parts by mass, when a conductive coating film-forming agent is formed into a coating film, the compound leaks out from the coating film in the case of using at high temperature, thus causing bleeding, which is not preferable. When the amount is more than 30.0 parts by mass, at least one kind of a compound selected from the bis(fluorosulfonyl)imide salts is less likely to dissolve in a coating film-forming component, and thus a solid phase is precipitated. In contrast, when the amount is within the above range of parts by mass, the compound does not leak out from a coating film even in the use-environment at high temperature, thus obtaining a conductive coating film-forming agent which has bleeding resistance and also has excellent conductivity.

It is also possible to add subsidiary components such as water, an organic solvent, a polymerizable monomer, a prepolymer, an oligomer and a polymer to the conductive coating film-forming agent of the present embodiment.

Various organic solvents can be used as the organic solvent. Specific examples thereof include alcohols such as methanol, ethanol, i-propanol, n-butanol, n-octanol, ethylene glycol monomethyl ether, ethylene glycol monoethyl ether, diethylene glycol mono-n-butyl ether, propyl glycol monomethyl ether and propyl glycol monoethyl ether; ketones such as acetone, methyl ethyl ketone, methyl isobutyl ketone, cyclohexanone and diisobutyl ketone; esters or lactones, such as ethyl acetate, n-butyl acetate, ethyl lactate, propylene glycol monomethyl ether acetate, propylene glycol monoethyl ether acetate and γ-butyrolactone; aromatic hydrocarbons such as benzene, toluene and xylene; amides or lactams, such as dimethylformamide, dimethylacetamide and N-methyl pyrrolidone; and the like. These organic solvents may be used alone, or two or more kinds thereof may be used in combination.

It is possible to use, as the polymerizable monomer, prepolymer, oligomer, polymer and the like, a composition containing a polymerizable monomer, a prepolymer or an oligomer, a polymer and the like, such as acrylate, methacrylate, a styrene derivative, a compound having an amide group, polyethylene, polypropylene, polyvinyl chloride, polyester, polycarbonate, an epoxy resin and polyacetal. These polymerizable monomer, prepolymer, oligomer and polymer may be used alone, or two or more kinds thereof may be used in combination.

Specific examples of the monofunctional (meth)acrylate include monomers such as methyl (meth)acrylate, ethyl (meth)acrylate, acrylonitrile, 2-hydroxyethyl (meth)acrylate, 2-hydroxypropyl (meth)acrylate, 2-hydroxybutyl (meth)acrylate, phenoxyethyl (meth)acrylate, 2-phenoxy-2-hydroxypropyl (meth)acrylate, 2-hydroxy-3-phenoxypropyl (meth)acrylate, 3-chloro-2-hydroxypropyl (meth)acrylate, glycerin mono(meth)acrylate, glycidyl (meth)acrylate, lauryl (meth)acrylate, polypropylene glycol mono(meth)acrylate, polyethylene glycol mono(meth)acrylate, polyethylene glycol-polypropylene glycol mono(meth)acrylate, methoxypolyethylene glycol mono(meth)acrylate, octoxypolyethylene glycol-polypropylene glycol mono(meth)acrylate, cyclohexyl (meth)acrylate, isobornyl (meth)acrylate, tricyclodecanyl (meth)acrylate, dicyclopentenyl (meth)acrylate, adamantyl (meth)acrylate, n-butyl (meth)acrylate, hexyl (meth)acrylate, heptyl (meth)acrylate, octyl (meth)acrylate, nonyl (meth)acrylate, decyl (meth)acrylate, isodecyl (meth)acrylate, dodecyl (meth)acrylate, n-stearyl (meth)acrylate, benzyl (meth)acrylate, phenolethylene oxide-modified (n = 2) (meth)acrylate, nonylphenolpropylene oxide-modified (n = 2.5) (meth)acrylate, 2-(meth)acryloyloxyethyl acid phosphate, a half (meth)acrylate of a phthalic acid derivative, such as 2-(meth)acryloyloxy-2-hydroxypropyl phthalate, N,N-dimethylaminoethyl (meth)acrylate or a quaternized product thereof, N,N-diethylaminoethyl (meth)acrylate or a quaternized product thereof, furfuryl (meth)acrylate, carbitol (meth)acrylate, benzyl (meth)acrylate, butoxyethyl (meth)acrylate and allyl (meth)acrylate 2-acryloyloxyethyl acid phosphate monoester; and oligomers such as monofunctional urethane (meth)acrylate, monofunctional epoxy (meth)acrylate and monofunctional polyester (meth)acrylate.

Examples of the difunctional (meth)acrylate include monomers such as neopentyl glycol di(meth)acrylate, diethylene glycol di(meth)acrylate, polyethylene glycol di(meth)acrylate, 1,6-hexanediol di(meth)acrylate, tripropylene glycol di(meth)acrylate, tricyclodecane dimethanol di(meth)acrylate, 1,3-adamantanediol di(meth)acrylate, an EO (epoxy) adduct di(meth)acrylate of bisphenol A, glycerin di(meth)acrylate, hydroxypivalic acid neopentyl glycol di(meth)acrylate, trimethylolpropane(meth)acrylic acid benzoic acid ester and 2-butyl-2-ethyl-1,3-propanediol di(meth)acrylate; and oligomers such as difunctional urethane (meth)acrylate, difunctional epoxy (meth)acrylate and difunctional polyester (meth)acrylate.

Examples of the polyfunctional (meth)acrylate include monomers such as pentaerythritol tetra(meth)acrylate, pentaerythritol tri(meth)acrylate, dipentaerythritol hexa(meth)acrylate, dipentaerythritol penta(meth)acrylate and trimethylolpropane tri(meth)acrylate; and oligomers such as polyfunctional urethane (meth)acrylate, polyfunctional epoxy (meth)acrylate and polyfunctional polyester (meth)acrylate.

Examples of the styrene derivative include p-tert-butoxystyrene, m-tert-butoxystyrene, p-acetoxystyrene, p-(1-ethoxyethoxy)styrene, p-methoxystyrene, 4-vinylbenzoic acid and the like.

Examples of the compound having an amide group include acrylamide, N-isopropylacrylamide, N,N-dimethylacrylamide, N-benzylacrylamide and the like.

Examples of the polyester include polyethylene terephthalate (PET), polytrimethylene terephthalate (PTT), polybutylene terephthalate (PBT), polyethylene naphthalate (PEN), polybutylene naphthalate (PBN), unsaturated polyester and the like.

Examples of the epoxy resin include a glycidyl ether-based epoxy resin, a novolak type epoxy resin, an alicyclic epoxy resin, a polyglycidyl ester-based epoxy resin, a polyglycidyl amine-based epoxy resin, a methylepichloro type epoxy resin and the like.

It is also possible to use, as the subsidiary component of the conductive coating film-forming agent in the present embodiment, the above-mentioned coating film-forming components as the prepolymer. The subsidiary component can also be used as a diluent of a conductive coating film-forming agent containing at least one kind of a compound selected from bis(fluorosulfonyl)imide salts represented by the formula (1) in the production of a conductive coating film-forming agent.

A polymerization initiator or the like can be used as other components of the present embodiment. Particularly, when a photocurable compound such as an acryl resin or a polyurethane resin is contained in the conductive coating film-forming agent and polymerization curing is carried out by ultraviolet rays and the like, the photopolymerization initiator is preferably contained in the conductive coating film-forming agent.

Various photopolymerization initiators can be used as the photopolymerization initiator. Specifically, it is possible to use monocarbonyl compounds such as benzophenone, 4-methyl-benzophenone, 2,4,6-trimethylbenzophenone, methyl-o-benzoylbenzoate and 4-phenylbenzophenone; dicarbonyl compounds such as benzoyl, 2-ethylanthraquinone, 9,10-phenanthrenequinone, methyl-α-oxobenzene acetate and 4-phenyl benzoyl; acetophenone compounds such as 2-hydroxy-2-methyl-1-phenylpropan-1-one and 1-(4-isopropylphenyl)-2-hydroxy-2-methyl-1-phenylpropan-1-one; ether compounds such as benzoin, benzoin methyl ether, benzoin ethyl ether, benzoin isopropyl ether, benzoin isobutyl ether and benzyl dimethyl ketal; acylphosphine oxide compounds such as 2,4,6-trimethylbenzoyldiphenylphosphine oxide and 4-n-propylphenyl-di(2,6-dichlorobenzoyl)phosphine oxide; and aminocarbonyl compounds such as methyl-4-(dimethoxyamino)benzoate, ethyl-4-(dirnethylamino)benzoate and 2-n-butoxyethyl-4-(dimethylamino)benzoate. These photopolymerization initiators can be used alone, or two or more kinds thereof can be used in combination. In order to enhance a polymerization rate, the photopolymerization initiator may be used in combination of one, or two or more kinds of auxiliary photoreaction initiators and photosensitizers. As other polymerization initiators, 2,2'-azobisisobutyronitrile as an azo-based polymerization initiator may be used.

The conductive coating film-forming agent of the present embodiment may contain a main component of a conductive coating film-forming agent composed of a coating film-forming component having a polyol structure and at least one kind of a compound selected from bis(fluorosulfonyl)imide salts represented by the formula (1), and the subsidiary component. The main component of the conductive coating film-forming agent preferably accounts for 0.1 to 100% by mass, and more preferably 10.0 to 100% by mass, of the whole amount of the conductive coating film-forming agent of the present embodiment. When the main component of the conductive coating film-forming agent accounts for less than 0.1 % by mass, the effect of conductivity cannot be sufficiently obtained, which is not preferable. In contrast, when the main component of the conductive coating film-forming agent accounts for the proportion (percentage) within the above range of the total amount of the conductive coating film-forming agent of the present embodiment, the compound does not leak out from a coating film even in the use-environment at high temperature and a uniform coating film can be obtained, and also a conductive coating film-forming agent having excellent bleeding resistance and conductivity is obtained.

In the present embodiment, there is no particular limitation on the amount of the polymerization initiator to be added to the conductive coating film-forming agent, and the polymerization initiator is preferably added in the amount within a range from 0.1 to 20 parts by mass based on 100 parts by mass of the coating film-forming component having a polyol structure, and more preferably from 1 to 10 parts by mass from the viewpoint of the curing rate and the hardness of the coating film.

As other components, additives such as a dye, a pigment, a filler, a silane coupling agent, an adhesion improver, a stabilizer, a leveling agent, a defoamer, an antisettling agent, a lubricant and a rust-preventing agent may be added.

The conductive coating film-forming agent of the present embodiment can be used in the form of a known coating material, and examples thereof include a solvent-free coating material, an organic solvent coating material, an aqueous emulsion coating material and the like. In the case of using as the organic solvent coating material, the organic solvent can be used. In the case of using as the coating material in this way, there is no particular limitation on the addition amount of the solvent, and the amount of the solvent is preferably within a range from 0 to 20 parts by mass, and more preferably from 0 to 10 parts by mass, based on 1.0 parts by mass of the total amount of the coating film-forming component having a polyol structure and bis(fluorosulfonyl)imide salts.

Next, the method for producing a conductive coating film-forming agent of the present embodiment will be described below.

As an example of the method for producing a conductive coating film-forming agent of the present embodiment, at least one kind of a compound selected from bis(fluorosulfonyl)imide salts represented by the formula (1) is dissolved in a coating film-forming component having a polyol structure to obtain a conductive coating film-forming agent. This conductive coating film-forming agent is then added to a solvent of one kind, or a combination of two or more kinds of the group consisting of water, an organic solvent, a polymerizable monomer, a prepolymer, an oligomer and a polymer. Furthermore, other components (for example, polymerization initiator) are optionally added. Whereby, it is possible to produce a conductive coating film-forming agent in which the bis(fluorosulfonyl)imide salts are uniformly dispersed in a coating film-forming component having a polyol structure.

Herein, as at least one kind of a compound selected from bis(fluorosulfonyl)imide salts represented by the formula (1), in the case of using those in which the content of fluorine ions in the compound is 100 ppm or less, a conductive coating film-forming agent can be produced using the following method.

Description will be specifically made by way of the case where bis(fluorosulfonyl)imide salts represented by the formula (1) are a bis(fluorosulfonyl)imide lithium salt, a bis(fluorosulfonyl)imide sodium salt and a bis(fluorosulfonyl)imide potassium salt as an example.

First, a mixed solution containing bis(fluorosulfonyl)imide and fluorosulfuric acid is obtained. There is no particular limitation on the mixed solution containing bis(fluorosulfonyl)imide and fluorosulfuric acid, and the mixed solution is preferably a reaction solution of urea (CO(NH₂)₂) and fluorosulfuric acid (FSO₃H).

Next, the mixed solution is dissolved in water to prepare an aqueous solution. In this case, the amount of water in which the mixed solution is to be dissolved is preferably adjusted, for example, to 1 to 50 times the amount (parts by mass) of the mixed solution.

Next, the aqueous solution is promptly neutralized with an aqueous alkali solution to prepare a neutralized solution. Whereby, a bis(fluorosulfonyl)imide salt ((FSO₂)₂N·M) and a fluorosulfuric acid salt (FSO₃·M) are formed. The aqueous solution is preferably neutralized until the pH ranges from 4 to 10. The alkali to be used to neutralize the aqueous solution is preferably, for example, an aqueous solution of any one kind of MOH, M₂CO₃ and MHCO₃. The cation M is any one kind of Na, K and Li.

Next, a bis(fluorosulfonyl)imide salt is isolated from the neutralized solution. Herein, when the bis(fluorosulfonyl)imide salt has poor solubility in the neutralized solution, it is possible to isolate the bis(fluorosulfonyl)imide salt from the neutralized solution by a separating operation such as liquid separation (in the case of separating as a liquid) or filtration (in the case of precipitating as a solid).

Usually, the bis(fluorosulfonyl)imide salt is isolated by removing moisture from the neutralized solution, thereby precipitating a solid. However, in this method, the bis(fluorosulfonyl)imide salt may be decomposed during an isolating operation of the bis(fluorosulfonyl)imide salt, resulting in an increase of fluorine ions. When fluorine ions in the bis(fluorosulfonyl)imide salt increase, the pH of the solution in which the bis(fluorosulfonyl)imide salt is dissolved becomes lower. Therefore, since decomposition of the bis(fluorosulfonyl)imide salt further proceeds in the conductive coating film-forming agent in which the bis(fluorosulfonyl)imide salt is dissolved, it was difficult to maintain durability of the coating film.

In contrast, in the method of the present embodiment, the bis(fluorosulfonyl)imide salt is partially or completely dissolved in the neutralized solution, and the bis(fluorosulfonyl)imide salt can be extracted from the neutralized solution using an organic solvent such as ethyl acetate.

Specifically, the organic solvent such as ethyl acetate is added to the neutralized solution thereby separating into a liquid phase in which the bis(fluorosulfonyl)imide salt is extracted in the organic solvent, and an aqueous phase, thus removing the aqueous phase. Furthermore, water is added to the extracted liquid phase and an extract liquid is washed two or three times with water to obtain an extract liquid of the bis(fluorosulfonyl)imide salt. In the present embodiment, an acidic component in the bis(fluorosulfonyl)imide salt is removed by washing with water during the extracting operation. Accordingly, the aqueous solution containing 1% by mass of at least one kind of a compound selected from bis(fluorosulfonyl)imide salts represented by the formula (1) isolated by the above method shows the pH of 5.0 or higher and lower than 6.0.

In this manner, a bis(fluorosulfonyl)imide lithium salt, a bis(fluorosulfonyl)imide sodium salt and a bis(fluorosulfonyl)imide potassium salt can be produced by isolating only the bis(fluorosulfonyl)imide salt from the neutralized solution.

The content of fluorine ions in at least one kind of a compound selected from bis(fluorosulfonyl)imide salts represented by the formula (1) produced by the above method becomes 100 ppm or less.

As another example of the method for producing a conductive coating film-forming agent of the present embodiment, a coating film-forming component having a polyol structure may be used as the subsidiary component. In this case, it is preferable that a coating film-forming component having a polyol structure as the subsidiary component be added after dissolving the bis(fluorosulfonyl)imide salts in the coating film-forming component having a polyol structure, and also a polymerization initiator be added as other components. In the conductive coating film-forming agent, the amount of the bis(fluorosulfonyl)imide salts is preferably adjusted within a range from 0.01 to 30.0 parts by mass based on 100 parts by mass of the coating film-forming component having a polyol structure, and the amount of the polymerization initiator is preferably adjusted within a range from 0.1 to 20 parts by mass based on 100 parts by mass of the coating film-forming component having a polyol structure. By this production method, the bis(fluorosulfonyl)imide salts can be dispersed more uniformly in the coating film-forming component having a polyol structure.

Furthermore, as another example of the method for producing a conductive coating film-forming agent of the present embodiment, the bis(fluorosulfonyl)imide salts may be directly added to the coating film-forming component.

The conductive coating film-forming agent of the present embodiment may be used, for example, for the purpose of imparting conductivity as a raw material of a pressure-sensitive adhesive of an optical film. In this case, a preferable composition contains the following:
a coating film-forming component: 10 to 70% by mass, more preferably 30 to 50% by mass,
at least one kind of a compound selected from bis(fluorosulfonyl)imide salts represented by the formula (1): 0.001 to 21% by mass, and more preferably 0.01 to 7% by mass,
a subsidiary component,
an organic solvent: 0 to 89.9% by mass, more preferably 0 to 50% by mass, water: 0 to 89.9% by mass, more preferably 0 to 50% by mass, and
a polymerization initiator: 0.01 to 14% by mass, more preferably 0.01 to 7% by mass.

A cross-linking agent may be further added to the conductive coating film-forming agent. An isocyanate compound and an epoxy compound may be used as the cross-linking agent.

The molded article using the conductive coating film-forming agent of the present embodiment will be described below. The molded article of the present embodiment is constituted by forming a coating film made of a conductive coating film-forming agent.

It is possible to use, as a base material of the molded article, a film or sheet made of glass or a known resin. A coating film having conductivity is formed by applying a coating material containing a conductive coating film-forming agent dissolved therein on a surface of the base material, followed by drying and further curing.

The molded article of the present embodiment includes a coating film having excellent antistatic properties formed thereon and is therefore applicable to dust sheets, conductive sheets such as a discharge mat and an antistatic flooring material, antistatic films, antistatic release films, antistatic agents, pressure-sensitive adhesives, conductive coating materials and conductive coating agents of various displays and the like and can maintain stable characteristics for a long period. The molded article is also excellent in heat resistance and bleeding resistance at high temperature and is therefore suitably applicable as in-vehicle materials.

### [Examples]

The effects of the present embodiment will be described in more detail below by way of Examples. However, the present invention is not limited by Examples. In Examples, parts are by mass.

### <Evaluation Test 1 >

### (Example 1)

5 parts of potassium bis(fluorosulfonyl)imide (hereinafter abbreviated to "K-FSI") in which the content of fluorine ions measured by an ion chromatographic method is 12 ppm, as a bis(fluorosulfonyl)imide salt, was added to 95 parts of urethane acrylate (number of acryloyl groups: 5 (in a molecule), active ingredient: 80 parts, manufactured by DIC Corporation, UNIDIC 17-806), followed by mixing. Then, 5 parts of 2-hydroxy-2-methyl-1-phenyl-propan-l-one was added as a photopolymerization initiator to obtain a conductive coating film-forming agent of Example 1.

Next, the conductive coating film-forming agent was applied to a polyethylene terephthalate film using a bar coater and then irradiated with ultraviolet rays in a dose corresponding to 1,600 mJ/cm² for 10 seconds to obtain a coating film having a thickness of 10 to 20 µm. Surface resistivity (hereinafter simply referred to as "surface resistance") of this coating film was measured using a surface resistance meter (HT-450, manufactured by Mitsubishi Chemical Corporation)and found to be 1 × 10¹¹ Ω/sq. (see Table 1).

"Ω/sq." is a unit of the surface resistivity (sheet resistance) and may be merely "Ω".

### (Example 2)

Using lithium bis(fluorosulfonyl)imide (hereinafter abbreviated to "Li-FSI") in which the content of fluorine ions measured by an ion chromatographic method is 18 ppm, as a bis(fluorosulfonyl)imide salt, a conductive coating film-forming agent was produced in the same manner as in Example 1 to obtain a coating film. Surface resistance of this coating film was measured and found to be 1 × 10¹¹ Ω/sq. (see Table 1).

### (Comparative Example 1)

To 100 parts of the same urethane acrylate as in Example 1, 5 parts of 2-hydroxy-2-methyl-1-phenyl-propan-1-one was added as a photopolymerization initiator to obtain a conductive coating film-forming agent of Comparative Example 1. Then, a coating film was formed in the same manner as in Example 1 and surface resistance of this coating film was measured and found to be 1 × 10¹⁴ Ω/sq. or more (see Table 1).

### (Comparative Example 2)

Using lithium bis(trifluoromethanesulfonyl)imide (hereinafter abbreviated to "Li-TFSI") as a bis(trifluoromethanesulfonyl)imide salt, a conductive coating film-forming agent was produced in the same manner as in Example 1 to obtain a coating film. Surface resistance of this coating film was measured. As a result, it was 2 × 10¹² Ω/sq. (see Table 1).

**[Table 1]**

| | Additives | Concentration in resin composition (%) | Film thickness (µm) | Surface resistance (Ω/sq.) |
|---|---|---|---|---|
| Example 1 | K-FSI | 5.0 | 10 to 20 | 1 × 10¹¹ |
| Example 2 | Li-FSI | 5.0 | 10 to 20 | 1 x 10¹¹ |
| Comparative Example 1 | None (only resin) | 0 | 10 to 20 | 1 × 10¹⁴ or more |
| Comparative Example 2 | Li-TFSI | 5.0 | 10 to 20 | 2 × 10¹² |

As shown in Table 1, it was confirmed that surface resistance is 1 × 10¹⁴ Ω/sq. or more when a coating film made of only urethane acrylate is formed on a polyethylene terephthalate film in Comparative Example 1. It was also confirmed that the surface resistance deteriorates in Comparative Example 2 in which Li-TFSI is used as an imide salt, as compared with Comparative Example 1. In contrast, it was confirmed that the surface resistance is inferior in Example 1 and Example 2, as compared with Comparative Example 2. From the above description, it was confirmed that a bis(fluorosulfonyl)imide salt contained in a coating film-forming component composed of polyurethane acrylate causes deterioration of surface resistance as compared with a bis(trifluoromethanesulfonyl)imide salt.

### <Evaluation Test 2>

### (Example 3)

20 parts of K-FSI in which the content of fluorine ions measured by an ion chromatographic method is 5 ppm, as a bis(fluorosulfonyl)imide salt, was dissolved in 80 parts of polyethylene glycol dimethacrylate (oxyethylene unit: 4) to prepare a diluted solution and 2 parts of this diluted solution was added to 98 parts of polyethylene glycol methacrylate containing no K-FSI (oxyethylene unit: 4), followed by mixing. Then, 4 parts of benzyl dimethyl ketal was added as a photopolymerization initiator to obtain a conductive coating film-forming agent of Example 3.

Next, the conductive coating film-forming agent was applied to a polyethylene terephthalate film using a bar coater and then irradiated with ultraviolet rays in a dose corresponding to 1,600 mJ/cm² for 10 seconds to obtain a coating film having a thickness of 30 to 40 µm. Surface resistivity (hereinafter simply referred to as "surface resistance") of this coating film was measured using a surface resistance meter (HT-450, manufactured by Mitsubishi Chemical Corporation) and found to be 1 × 10⁹ Ω/sq. (see Table 2).

### (Example 4)

Using Li-FSI in which the content of fluorine ions measured by an ion chromatographic method is 11 ppm, as a bis(fluorosulfonyl)imide salt, a conductive coating film-forming agent was produced in the same manner as in Example 3 to obtain a coating film. Surface resistance of this coating film was measured and found to be 1 × 10⁹ Ω/sq. (see Table 2).

### (Example 5)

Using ammonium bis(fluorosulfonyl)imide (hereinafter abbreviated to "NH₄-FSI") in which the content of fluorine ions measured by an ion chromatographic method is 12 ppm, as a bis(fluorosulfonyl)imide salt, a conductive coating film-forming agent was produced in the same manner as in Example 3 to obtain a coating film. Surface resistance of this coating film was measured and found to be 2 × 10⁹ Ω/sq. (see Table 2).

### (Comparative Example 3)

To 100 parts of polyethylene glycol methacrylate containing no K-FSI (oxyethylene unit: 4), 4 parts of benzyl dimethyl ketal was added as a photopolymerization initiator to obtain a conductive coating film-forming agent of Comparative Example 3. Then, a coating film was formed in the same manner as in Example 3 and surface resistance of this coating film was measured and found to be 6 × 10¹¹ Ω/sq. (see Table 2).

### (Comparative Example 4)

Using Li-TFSI as a bis(trifluoromethanesulfonyl)imide salt, a conductive coating film-forming agent was produced in the same manner as in Example 3 to obtain a coating film. Surface resistance of this coating film was measured and found to be 8 × 10¹⁰ Ω/sq. (see Table 2).

**[Table 2]**

| | Additives | Concentration in resin composition (%) | Film thickness (µm) | Surface resistance (Ω/sq.) |
|---|---|---|---|---|
| Example 3 | K-FSI | 0.4 | 30 to 40 | 1 × 10⁹ |
| Example 4 | Li-FSI | 0.4 | 30 to 40 | 1 × 10⁹ |
| Example 5 | NH₄-FSI | 0.4 | 30 to 40 | 2 × 10⁹ |
| Comparative Example 3 | None (only resin) | 0 | 30 to 40 | 6 × 10¹¹ |
| Comparative Example 4 | Li-TFSI | 0.4 | 30 to 40 | 8 × 10¹⁰ |

As shown in Table 2, it was confirmed that surface resistance is high when a coating film made of only polyethylene glycol methacrylate is formed on a polyethylene terephthalate film in Comparative Example 3. It was also confirmed that the surface resistance deteriorates in Comparative Example 4 in which Li-TFSI is used as an imide salt, as compared with Comparative Example 3. In contrast, it was confirmed that the surface resistance is inferior in Examples 3 to 5, as compared with Comparative Example 4. From the above description, it was confirmed that a bis(fluorosulfonyl)imide salt contained in a coating film-forming component composed of polyethylene glycol methacrylate causes deterioration of surface resistance as compared with a bis(trifluoromethanesulfonyl)imide salt.

### <Evaluation Test 3>

### (Example 6)

20 parts of potassium bis(fluorosulfonyl)imide (hereinafter abbreviated to "K-FSI") in which the content of fluorine ions measured by an ion chromatographic method is 9 ppm, as a bis(fluorosulfonyl)imide salt, was dissolved in 80 parts of three kinds of polyethylene glycol dimethacrylates each including a different oxyethylene unit (oxyethylene unit: 9, 14, 23) to prepare a diluted solution and then 2 parts of this diluted solution was added to 98 parts of polyethylene glycol methacrylate containing no K-FSI (oxyethylene unit: 9,14, 23), followed by mixing. Then, 4 parts of benzyl dimethyl ketal was added as a photopolymerization initiator to obtain a conductive coating film-forming agent of Example 6.

Next, the conductive coating film-forming agent was applied to a polyethylene terephthalate film using a bar coater and then irradiated with ultraviolet rays in a dose corresponding to 1,600 mJ/cm² for 10 seconds to obtain a coating film having a thickness of 20 to 30 µm. Surface resistivity (hereinafter simply referred to as "surface resistance") of this coating film was measured using a surface resistance meter (HT-450, manufactured by Mitsubishi Chemical Corporation) and found to be 5 × 10⁷ Ω/sq. (oxyethylene unit: 9), 4 × 10⁷ Ω/sq. (oxyethylene unit: 14), and 4 × 10⁷ Ω/sq. (oxyethylene unit: 23). A surface of this coating film was strongly wiped 20 times with a cloth made of cotton after heating at 100°C for 10 minutes, and after the measurement was performed again, no change in surface resistance was recognized. The results are shown in Table 3.

### (Example 7)

Using lithium bis(fluorosulfonyl)imide in which the content of fluorine ions measured by an ion chromatographic method is 2 ppm (hereinafter abbreviated to "Li-FSI"), as a bis(fluorosulfonyl)imide salt, a conductive coating film-forming agent was produced in the same manner as in Example 6 to obtain a coating film. Surface resistance of this coating film was measured and found to be 4 × 10⁸ Ω/sq. (oxyethylene unit: 9), 5 × 10⁷ Ω/sq. (oxyethylene unit: 14), and 4 × 10⁷ Ω/sq. (oxyethylene unit: 23). A surface of this coating film was strongly wiped 20 times with a cloth made of cotton after heating at 100°C for 10 minutes, and after the measurement was performed again, no change in surface resistance was recognized. The results are shown in Table 3.

**[Table 3]**

| | Additives | Resin (oxyethylene unit) | Surface resistance (Ω/sq.) | Surface resistance (Ω/sq.) after heating and wiping off |
|---|---|---|---|---|
| Example 6 | K-FSI | 9 | 5 × 10⁷ | Not changed |
| | | 14 | 4 × 10⁷ | |
| | | 23 | 4 × 10⁷ | |
| Example 7 | Li-FSI | 9 | 4 × 10⁸ | Not changed |
| | | 14 | 5 × 10⁷ | |
| | | 23 | 4 × 10⁷ | |

As shown in Table 3, it was confirmed that the addition of a bis(fluorosulfonyl)imide salt causes deterioration of surface resistance, although the addition amount is comparatively small amount in Example 6 and Example 7. In Example 6 and Example 7, even if a surface of a coating film was strongly wiped 20 times with a cloth made of cotton after heating at 100°C for 10 minutes, and then the measurement was performed again, no change in surface resistance was recognized. Therefore, it was confirmed that bleeding resistance is excellent.

### <Evaluation Test 4>

### (Example 8)

To 100 parts of polytetramethylene ether glycol with hydroxyl groups at both ends, having a number average molecular weight of 2,000, 12.5 parts of 4,4'-diphenylmethane diisocyanate and 260 parts of methyl ethyl ketone (product containing 10 parts of K-FSI dissolved therein in which the content of fluorine ions measured by an ion chromatographic method is 12 ppm) were added, and then the mixture was reacted at 80°C for 1 hour to obtain a polyurethane solution having the concentration of 30% by mass. This solution was applied to a polyethylene terephthalate film using a bar coater and then heated by a dryer at 60°C for 2 hours to obtain a coating film. The thickness of this coating film was measured by a micrometer (manufactured by Mitutoyo Corporation) and found to be 10 µm. Surface resistance of this coating film was measured using a surface resistance meter (HT-450, manufactured by Mitsubishi Chemical Corporation) and found to be 1 × 10¹⁰ Ω/sq.

### (Comparative Example 5)

In the same manner as in Example 8, 12.5 parts of 4,4'-diphenylmethane diisocyanate and 260 parts of methyl ethyl ketone were added to 100 parts of a polytetramethylene ether glycol with hydroxyl groups at both ends, having a number average molecular weight of 2,000, and then the mixture was reacted at 80°C for 1 hour to prepare a polyurethane solution having the concentration of 30% by mass, thus obtaining a coating film. Surface resistance of this coating film was measured and found to be 1 × 10¹⁴ Ω/sq. or more.

**[Table 4]**

| | Additives | Concentration in resin composition (%) | Film thickness (µm) | Surface resistance (Ω/sq.) |
|---|---|---|---|---|
| Example 8 | K-FSI | 2.7 | 10 | 1 × 10¹⁰ |
| Comparative Example 5 | None (only resin) | 0 | 10 | 1 × 10¹⁴ or more |

As shown in Table 4, it was confirmed that surface resistance is high when a coating film made of only polyurethane is formed on a polyethylene terephthalate film in Comparative Example 5. In contrast, it was confirmed that surface resistance is inferior in Example 8, as compared with Comparative Example 5. From the above description, it was confirmed that a bis(fluorosulfonyl)imide salt contained in a coating film-forming component composed of polyurethane causes deterioration of surface resistance.

### <Evaluation Test 5>

### (Example 9)

10 parts of K-FSI in which the content of fluorine ions measured by an ion chromatographic method is 7 ppm, as a bis(fluorosulfonyl)imide salt, was dissolved in 90 parts of methyl ethyl ketone to prepare a diluted solution, and then 8 parts of this diluted solution was added to 92 parts of polyether-based urethane (active ingredient: 35 parts, manufactured by DIC Corporation, HYDRAN WLS-201) to obtain a conductive resin composition. This composition was applied to a polyethylene terephthalate film using a bar coater and then dried at 105°C to obtain a coating film. The thickness of this coating film was measured by a micrometer (manufactured by Mitutoyo Corporation) and found to be 20 µm. Surface resistance of this coating film was measured by a surface resistance meter (HT-450, manufactured by Mitsubishi Chemical Corporation) and found to be 1 × 10¹⁰ Ω/sq.

### (Comparative Example 6)

In the same manner as in Example 9, a coating film was formed of polyether-based urethane. Surface resistance of this coating film was measured and found to be 1 × 10¹⁴ Ω/sq. or more.

### (Comparative Example 7)

Using Li-TFSI as a bis(trifluoromethanesulfonyl)imide salt, a conductive resin composition was produced in the same manner as in Example 9 to obtain a coating film. Surface resistance of this coating film was measured and found to be 8 × 10¹⁰ Ω/sq.

**[Table 5]**

| | Additives | Concentration in resin composition (%) | Film thickness (µm) | Surface resistance (Ω/sq.) |
|---|---|---|---|---|
| Example 9 | K-FSI | 2.5 | 20 | 1 × 10¹⁰ |
| Comparative Example 6 | None (only resin) | 0 | 20 | 1 × 10¹⁴ or more |
| Comparative Example 7 | Li-TFSI | 2.5 | 20 | 8 × 10¹⁰ |

As shown in Table 5, it was confirmed that surface resistance is high when a coating film made of only polyether-based urethane is formed on a polyethylene terephthalate film in Comparative Example 6. It was also confirmed that surface resistance is inferior in Comparative Example 7 in which Li-TFSI is used as an imide salt, as compared with Comparative Example 6. In contrast, it was confirmed that that surface resistance is inferior in Example 9, as compared with Comparative Example 7. From the above description, it was confirmed that a bis(fluorosulfonyl)imide salt contained in a coating film-forming.component composed of polyether-based urethane causes deterioration of surface resistance.

### <Evaluation Test 6>

### (Example 10)

The coating film obtained in Example 1 was left to stand under the conditions of a temperature of 60°C and a relative humidity of 90% for 1,000 hours. Then, surface resistance was measured and found to be 1 × 10¹¹ Ω/sq and durability was confirmed as no change in surface resistance was recognized.

### (Example 11)

In the same manner, except that K-FSI used in Example 1 was replaced by K-FSI in which the content of fluorine ions measured by an ion chromatographic method is 58 ppm, a durability test was carried out and the surface resistance after 1,000 hours was found to be 3 × 10¹¹ Ω/sq.

### (Comparative Example 8)

In the same manner, except that K-FSI used in Example 1 was replaced by K-FSI in which the content of fluorine ions measured by an ion chromatographic method is 116 ppm, a durability test was carried out and the surface resistance after 1,000 hours was found to be 1 × 10¹² Ω/sq.

As is apparent from the above results, the content of fluorine in K-FSI was 116 ppm and surface resistance after 1,000 hours was remarkably improved in Comparative Example 8. In contrast, since the content of fluorine in K-FSI is 100 ppm or less, surface resistance after 1,000 hours was slightly improved in Example 11. Furthermore, since the content of fluorine in K-FSI is 20 ppm or less, an improvement in surface resistance after 1,000 hours was not confirmed in Example 10. From the above description, it was confirmed that a coating film using K-FSI in which the content of fluorine ions is 100 ppm or less is excellent in durability of conductivity.

### <Evaluation Test 7>

### (Example 12)

The coating film obtained in Example 3 was left to stand under the conditions of a temperature of 60°C and a relative humidity of 90% for 1,000 hours. Then, surface resistance was measured and found to be 1 × 10⁹ Ω/sq and durability was confirmed as no change in surface resistance was recognized.

### (Example 13)

In the same manner, except that K-FSI used in Example 3 was replaced by K-FSI in which the content of fluorine ions measured by an ion chromatographic method is 58 ppm, a durability test was carried out and the surface resistance after 1,000 hours was found to be 2 × 10⁹ Ω/sq.

### (Comparative Example 9)

In the same manner, except that K-FSI used in Example 3 was replaced by K-FSI in which the content of fluorine ions measured by an ion chromatographic method is 116 ppm, a durability test was carried out and the surface resistance after 1,000 hours was found to be 9 × 10⁹ Ω/sq.

As is apparent from the above results, the content of fluorine in K-FSI was 116 ppm and surface resistance after 1,000 hours was remarkably improved in Comparative Example 9. In contrast, since the content of fluorine in K-FSI is 100 ppm or less, surface resistance after 1,000 hours was slightly improved in Example 13. Furthermore, since the content of fluorine in K-FSI is 20 ppm or less, an improvement in surface resistance after 1,000 hours was not confirmed in Example 12. From the above description, it was confirmed that a coating film using K-FSI in which the content of fluorine ions is 100 ppm or less is excellent in durability of conductivity.

### <Evaluation Test 8>

### (Example 14)

The coating film in which an oxyethylene unit is 9 obtained in Example 6 was left to stand under the conditions of a temperature of 60°C and a relative humidity of 90% for 1,000 hours. Then, surface resistance was measured and found to be 5 × 10⁷ Ω/sq. and durability was confirmed as no change in the surface resistance was recognized.

### (Example 15)

In the same manner, except that K-FSI used in Example 6 was replaced by K-FSI in which the content of fluorine ions measured by an ion chromatographic method is 58 ppm, a durability test was carried out and the surface resistance after 1,000 hours was found to be 7 × 10⁷ Ω/sq.

### (Comparative Example 10)

In the same manner, except that K-FSI used in Example 6 was replaced by K-FSI in which the content of fluorine ions measured by an ion chromatographic method is 116 ppm, a durability test was carried out and the surface resistance after 1,000 hours was found to be 3 × 10⁸ H/sq.

As is apparent from the above results, the content of fluorine in K-FSI was 116 ppm and surface resistance after 1,000 hours was remarkably improved in Comparative Example 10. In contrast, since the content of fluorine in K-FSI is 100 ppm or less, surface resistance after 1,000 hours was slightly improved in Example 15. Furthermore, since the content of fluorine in K-FSI is 20 ppm or less, an improvement in surface resistance after 1,000 hours was not confirmed in Example 14. From the above description, it was confirmed that a coating film using K-FSI in which the content of fluorine ions is 100 ppm or less is excellent in durability of conductivity

### <Evaluation Test 9>

### (Example 16)

The coating film obtained in Example 8 was left to stand under the conditions of a temperature of 60°C and a relative humidity of 90% for 1,000 hours. Then, surface resistance was measured and found to be 1 × 10¹⁰ Ω/sq and durability was confirmed as no change in the surface resistance was recognized.

### (Example 17)

In the same manner, except that K-FSI used in Example 8 was replaced by K-FSI in which the content of fluorine ions measured by an ion chromatographic method is 58 ppm, a durability test was carried out and the surface resistance after 1,000 hours was found to be 2 × 10¹⁰ Ω/sq.

### (Comparative Example 11)

In the same manner, except that K-FSI used in Example 8 was replaced by K-FSI in which the content of fluorine ions measured by an ion chromatographic method is 116 ppm, a durability test was carried out and the surface resistance after 1,000 hours was found to be 9 × 10¹⁰ Ω/sq.

As is apparent from the above results, the content of fluorine in K-FSI was 116 ppm and surface resistance after 1,000 hours was remarkably improved in Comparative Example 11. In contrast, since the content of fluorine in K-FSI is 100 ppm or less, surface resistance after 1,000 hours was slightly improved in Example 17. Furthermore, since the content of fluorine in K-FSI is 20 ppm or less, an improvement in surface resistance after 1,000 hours was not confirmed in Example 16. From the above description, it was confirmed that a coating film using K-FSI in which the content of fluorine ions is 100 ppm or less is excellent in durability of conductivity.

### <Evaluation Test 10>

### (Example 18)

The coating film obtained in Example 9 was left to stand under the conditions of a temperature of 60°C and a relative humidity of 90% for 1,000 hours. Then, surface resistance was measured and found to be 1 × 10¹⁰ Ω/sq. and durability was confirmed as no change in the surface resistance was recognized.

### (Example 19)

In the same manner, except that K-FSI used in Example 9 was replaced by K-FSI in which the content of fluorine ions measured by an ion chromatographic method is 58 ppm, a durability test was carried out and the surface resistance after 1,000 hours was found to be 3 × 10¹⁰ Ω/sq.

### (Comparative Example 12)

In the same manner, except that K-FSI used in Example 9 was replaced by K-FSI in which the content of fluorine ions measured by an ion chromatographic method is 116 ppm, a durability test was carried out and the surface resistance after 1,000 hours was found to be 2 × 10¹¹ Ω/sq.

As is apparent from the above results, the content of fluorine in K-FSI was 116 ppm and surface resistance after 1,000 hours was remarkably improved in Comparative Example 12. In contrast, since the content of fluorine in K-FSI is 100 ppm or less, surface resistance after 1,000 hours was slightly improved in Example 19. Furthermore, since the content of fluorine in K-FSI is 20 ppm or less, an improvement in surface resistance after 1,000 hours was not confirmed in Example 18. From the above description, it was confirmed that a coating film using K-FSI in which the content of fluorine ions is 100 ppm or less is excellent in durability of conductivity.

## Claims

1. A conductive coating film-forming agent comprising:
a coating film-forming component having a polyol structure, and
at least one kind of a compound selected from bis(fluorosulfonyl)imide salts represented by the following formula (1):
(FSO₂)₂N·X (1)
wherein X in the formula (1) is any one kind of a cation selected from the group consisting of alkali metal, alkali earth metal, ammonium, phosphonium, alkylammonium and alkylphosphonium, and
the amount of fluorine ions in the at least one kind of a compound selected from bis(fluorosulfonyl)imide salts represented by the formula (1) is 100 ppm or less.

2. The conductive coating film-forming agent according to Claim 1, wherein X represented by the formula (1) is any one kind of an element of Li, Na and K.

3. The conductive coating film-forming agent according to Claim 1, wherein the ratio of the amount of fluorine ions to the amount of fluorine in bis(fluorosulfonyl)imide salts (amount of fluorine ions/amount of fluorine in bis(fluorosulfonyl)imide salts), in the conductive coating film-forming agent is from 1 × 10⁻⁵ to 1 × 10⁻³.

4. The conductive coating film-forming agent according to Claim 1 or 2, wherein the content of fluorine ions in the at least one kind of a compound selected from bis(fluorosulfonyl)imide salts represented by the formula (1) is 20 ppm or less.

5. The conductive coating film-forming agent according to any one of Claims 1 to 4, wherein the coating film-forming component having a polyol structure contains at least one kind of (meth)acrylate, urethane and urethane acrylate.

6. The conductive coating film-forming agent according to any one of Claims 1 to 5, wherein the at least one kind of a compound selected from bis(fluorosulfonyl)imide salts represented by the formula (1) is contained in the amount of 0.01 to 30.0 parts by mass based on 100 parts by mass of the coating film-forming component having a polyol structure.

7. A conductive coating film-forming agent which is obtained by diluting the conductive coating film-forming agent according to any one of Claims 1 to 6 with water or an organic solvent.

8. A conductive coating film-forming agent in which the conductive coating film-forming agent according to any one of Claims 1 to 6 is added to a subsidiary component of one, or a combination of two or more kinds of the group consisting of water, an organic solvent, a polymerizable monomer, a prepolymer, an oligomer and a polymer.

9. The conductive coating film-forming agent according to Claim 8, wherein the polymerizable monomer, prepolymer, oligomer or polymer is a thermosetting resin or a photocurable resin.

10. The conductive coating film-forming agent according to Claim 1, which contains 10 to 70% by mass of the coating film-forming component and 0.001 to 21% by mass of the compound, and also contains, as subsidiary components, 0 to 89.9% by mass of an organic solvent, 0 to 89.9% by mass of water and 0.01 to 14% by mass of a polymerization initiator.

11. A method for producing the conductive coating film-forming agent according to Claim 1, the method comprising:
a step of preparing a neutralized solution by neutralizing an aqueous solution which includes at least one kind of bis(fluorosulfonyl)imide and fluorosulfuric acid with an aqueous alkali solution;
a step of separating into a liquid phase in which at least one kind of a compound selected from bis(fluorosulfonyl)imide salts represented by the formula (1) is extracted in an organic solvent, and an aqueous phase, by adding an organic solvent to the neutralized solution;
a step of removing the aqueous phase;
a step of isolating at least one kind of a compound selected from bis(fluorosulfonyl)imide salts represented by the formula (1) by washing the extracted liquid phase by adding the water to the extracted liquid phase, thereby removing an acidic component in at least one kind of a compound selected from bis(fluorosulfonyl)imide salts represented by the formula (1); and
a step of dissolving the at least one kind of a compound selected from bis(fluorosulfonyl)imide salts represented by the formula (1) in a coating film-forming component having a polyol structure,
wherein, after the step of isolating, an aqueous solution containing 1% by mass of at least one kind of a compound selected from bis(fluorosulfonyl)imide salts represented by the formula (1) shows the pH of 5.0 or higher and lower than 6.0.

12. The method for producing a conductive coating film-forming agent according to Claim 11, further comprising: a step of adding the obtained solution after the step of dissolving to one, or a combination of two or more kinds of water, an organic solvent, a polymerizable monomer, a prepolymer, an oligomer and a polymer.

13. A molded article, **characterized in that** a coating film made of the conductive coating film-forming agent according to any one of Claims 1 to 10 is formed.

14. A pressure-sensitive adhesive, wherein the conductive coating film-forming agent according to Claim 10 is used as a raw material.

## Patentansprüche

1. Ein leitfähiges Beschichtungsfilm-bildendes Mittel, umfassend:
eine Beschichtungsfilm-bildende Komponente mit Polyol-Struktur, und zumindest eine Art von Verbindung, ausgewählt aus Bis(fluorosulfonyl)imidsalzen,
wiedergegeben durch die folgende Formel (1):
(FSO₂)₂N·X (1)
worin X in der Formel (1) irgendeine einzelne Art eines Kations, ausgewählt aus der Gruppe bestehend aus Alkalimetallen, Erdalkalimetallen, Ammonium, Phosphonium, Alkylammonium und Alkylphosphonium darstellt, und
die Menge von Fluoridionen in der mindestens einen Art von Verbindung, ausgewählt aus durch Formel (1) wiedergegebenen Bis(fluorosulfonyl)imidsalzen, 100 ppm oder weniger beträgt.

2. Das leitfähige Beschichtungsfilm-bildende Mittel gemäß Anspruch 1, worin X, wiedergegeben durch Formel (1), irgendeines der Elemente Li, Na und K ist.

3. Das leitfähige Beschichtungsfilm-bildende Mittel gemäß Anspruch 1, worin das Verhältnis der Menge von Fluoridionen zu der Menge von Fluor in Bis(fluorosulfonyl)imidsalzen (Menge von Fluorid-Ionen/Menge Fluor in Bis(fluorosulfonyl)imidsalzen) in dem leitfähigen Beschichtungsfilm-bildenden Mittel im Bereich von 1 × 10⁻⁵ bis 1 × 10⁻³ liegt.

4. Das leitfähige Beschichtungsfilm-bildende Mittel gemäß Anspruch 1 oder 2, worin der Gehalt von Fluorid-Ionen in der mindestens einen Art von Verbindung, ausgewählt aus den durch Formel (1) wiedergegebenen Bis(fluorosulfonyl)imidsalzen, 20 ppm oder weniger beträgt.

5. Das leitfähige Beschichtungsfilm-bildende Mittel gemäß einem der Ansprüche 1 bis 4, worin die Beschichtungsfilm-bildende Komponente mit Polyol-Struktur mindestens eine Art von Methacrylat, Urethan und Urethanacrylat enthält.

6. Das leitfähige Beschichtungsfilm-bildende Mittel gemäß einem der Ansprüche 1 bis 5, worin die mindestens eine Art von Verbindung, ausgewählt aus den durch Formel (1) wiedergegebenen Bis(fluorosulfonyl)imidsalzen, in einer Menge von 0.01 bis 30.0 Massenteilen auf Grundlage von 100 Massenteilen der Beschichtungsfilm-bildenden Komponente mit Polyol-Struktur enthalten ist.

7. Ein leitfähiges Beschichtungsfilm-bildendes Mittel, das durch Verdünnen des leitfähigen Beschichtungsfilm-bildenden Mittels gemäß einem der Ansprüche 1 bis 6 mit Wasser oder einem organischen Lösungsmittel erhalten wird.

8. Ein leitfähiges Beschichtungsfilm-bildendes Mittel, bei dem das leitfähige Beschichtungsfilm-bildende Mittel gemäß einem der Ansprüche 1 bis 6 zu einer ergänzenden Komponente, ausgewählt aus einem, zweien oder mehr Vertretern der Gruppe bestehend aus Wasser, einem organischen Lösungsmittel, einem polymerisierbaren Monomer, einem Präpolymer, einem Oligomer und einem Polymer, zugegeben wird.

9. Das leitfähige Beschichtungsfilm-bildende Mittel gemäß Anspruch 8, worin das polymerisierbare Monomer, Präpolymer, Oligomer oder Polymer ein wärmehärtbares Harz oder ein photohärtbares Harz ist.

10. Das leitfähige Beschichtungsfilm-bildende Mittel gemäß Anspruch 1, das 10 bis 70 Gewichts-% der Beschichtungsfilm-bildenden Komponente und 0.001 bis 21 Gewichts-% der Verbindung enthält, und das außerdem, als ergänzende Komponenten, 0 bis 89.9 Gewichts-% eines organischen Lösungsmittels, 0 bis 89.9 Gewichts-% Wasser und 0.01 bis 14 Gewichts-% eines Polymerisationsinitiators enthält.

11. Ein Verfahren zur Herstellung des leitfähigen Beschichtungsfilm-bildenden Mittels gemäß Anspruch 1, wobei das Verfahren umfasst:
einen Schritt der Herstellung einer neutralisierten Lösung durch Neutralisation einer wässrigen Lösung, die mindestens eine Art eines Bis(fluorosulfonyl)imides und Fluorschwefelsäure enthält, mit einer wässrigen Alkali-Lösung;
einen Schritt der Trennung, durch Zugabe eines organischen Lösungsmittels zu der neutralisierten Lösung, in eine flüssige Phase, bei der mindestens eine Art von Verbindung, ausgewählt aus den durch Formel (1) wiedergegebenen Bis(fluorosulfonyl)imidsalzen, in ein organisches Lösungsmittel extrahiert wird, und in eine wässrige Phase;
einen Schritt des Entfernens der wässrigen Phase;
einen Schritt der Isolierung mindestens einer Art von Verbindung, ausgewählt aus den durch Formel (1) wiedergegebenen Bis(fluorosulfonyl)imidsalzen, durch Waschen der extrahierten flüssigen Phase durch Zugabe von Wasser zu der extrahierten flüssigen Phase, um dadurch eine saure Komponente in mindestens einer Art der Verbindung,
ausgewählt aus den durch Formel (1) dargestellten Bis(fluorosulfonyl)imidsalzen zu entfernen; und
einen Schritt des Auflösens der mindestens einen Art von Verbindung ausgewählt aus den durch Formel (1) dargestellten (Bis)fluorosulfonyl)imidsalzen in einer Beschichtungsfilm-bildenden Komponente mit einer Polyolstruktur, worin, nach dem Schritt der Isolierung, eine 1 Gewichts-% der mindestens eine Art von Verbindung, ausgewählt aus den durch Formel (1) dargestellten Bis(fluorosulfonyl)imidsalzen, enthaltende wässrige Lösung einen pH-Wert von 5.0 oder höher und niedriger als 6.0 aufweist.

12. Das Verfahren zur Herstellung eines leitfähigen Beschichtungsfilm-bildenden Mittels gemäß Anspruch 11, darüber hinaus umfassend: einen Schritt der Zugabe der erhaltenen Lösung nach dem Schritt des Auflösens zu einem, oder einer Kombination von zweien oder mehr Vertretern von Wasser, einem organischen Lösungsmittel, einem polymerisierbaren Monomer, einem Präpolymer, einem Oligomer und einem Polymer.

13. Ein Formteil, dadurch charakterisiert, dass ein Beschichtungsfilm, hergestellt aus dem leitfähigen Beschichtungsfilm-bildenden Mittel gemäß einem der Ansprüche 1 bis 10, gebildet wird.

14. Ein druckempfindlicher Klebstoff, worin das leitfähige Beschichtungsfilm-bildende Mittel gemäß Anspruch 10 als Rohmaterial verwendet wird.

## Revendications

1. Agent de formation de film de revêtement conducteur comprenant :
un composant de formation de film de revêtement ayant une structure polyolique, et au moins une espèce d'un composé sélectionnée parmi les sels de bis(fluorosulfonyl)imide, représentés par la formule suivante (1) :
(FSO₂)₂N·X (1)
dans laquelle X dans la formule (1) est une espèce quelleconque d'un cation consistant en le métal alcaline, le métal alcalino-terreux, l'ammonium, le phosphonium, l'alkylammonium et l'alkylphosphonium, et
la quantité des ions fluorure dans l'au moins une espèce d'un composé sélectionnée parmi les sels de bis(fluorosulfonyl)imide représentés par la formule (1) est 100 ppm ou moins.

2. Agent de formation de film de revêtement conducteur selon la revendication 1, dans lequel X représenté par la formule (1) est une espèce quelleconque d'un élément de Li, Na et K.

3. Agent de formation de film de revêtement conducteur selon la revendication 1, dans lequel le rapport de la quantité de ions fluorure à la quantité de fluorure dans les sels de bis(fluorosulfonyl)imide (quantité de ions fluorure/quantité de fluorure dans les sels de bis(fluorosulfonyl)imide) dans l'agent de formation de film de revêtement conducteur est de 1x10⁻⁵ à 1x10⁻³.

4. Agent de formation de film de revêtement conducteur selon la revendication 1 ou 2, dans lequel le taux de ions fluorure dans l'au moins une espèce d'un composé sélectionnée parmi les sels de bis(fluorosulfonyl)imide représentés par la formule (1) est 20 ppm ou moins.

5. Agent de formation de film de revêtement conducteur selon l'une des revendications 1 à 4, dans lequel le composant de formation de film ayant une structure polyolique contient au moins une espèce de (méth)acrylate, d'uréthane et d'uréthane-acrylate.

6. Agent de formation de film de revêtement conducteur selon l'une des revendications 1 à 4, dans lequel l'au moins une espèce d'un composé sélectionnée parmi les sels de bis(fluorosulfonyl)imide représentés par la formule (1) est contenue en quantité de 0,01 à 30 parties en masse basée sur 100 parties en masse du composant de formation de film de revêtement ayant une structure polyolique.

7. Agent de formation de film de revêtement conducteur qui est obtenu par la dilution de l'agent de formation de film de revêtement conducteur selon l'une des revendications 1 à 6 avec de l'eau ou un solvant organique.

8. Agent de formation de film de revêtement conducteur dans lequel l'agent de formation de film de revêtement conducteur selon l'une des revendications 1 à 6 est ajouté à un composant subsidiaire d'une ou d'une combinaisons de deux ou plusieurs espèces parmi le groupe consistant en l'eau, un solvant organique, un monomère polymérisable, un prépolymère, un oligomère et un polymère.

9. Agent de formation de film de revêtement conducteur selon la revendication 8, dans lequel le monomère polymérisable, le prépolymère, l'oligomère ou le polymère est une résine thermodurcissable ou une résine photodurcissable.

10. Agent de formation de film de revêtement conducteur selon la revendication 1, qui contient 10 à 70 % en masse du composant de formation de film de revêtement et 0,001 à 21 % en masse du composé, et contient aussi, comme des composants subsidiaires, 0 à 89,9 % en masse d'un solvant organique, 0 à 89,9 % en masse d'eau et 0,01 à 14 % en masse d'un initiateur de la polymérisation.

11. Procédé pour la production l'agent de formation de film de revêtement conducteur selon la revendication 1, le procédé comprenant :
une étape de préparation d'une solution neutralisée par la neutralisation d'une solution aqueuse qui inclue au moins une espèce de bis(fluorosulfonyl)imide et de l'acide fluorosulfonique avec une solution alcaline aqueuse ;
une étape de séparation en une phase liquide dans laquelle au moins une espèce d'un composé sélectionnée parmi les sels de bis(fluorosulfonyl)imide, représentés par la formule (1) est extraite dans un solvant organique, et une phase aqueuse, par l'addition d'un solvant organique à la solution neutralisée ; une étape de l'enlèvement de la phase aqueuse ;
une étape d'isolation d'au moins une espèce d'un composé sélectionnée parmi les sels de bis(fluorosulfonyl)imide, représentés par la formule (1) par le lavage de la phase liquide extraite par l'addition de l'eau à la phase liquide, en enlevant de ce fait un composant acide dans au moins une espèce d'un composé sélectionnée parmi les sels de bis(fluorosulfonyl)imide représentés par la formule (1) ; et
une étape de dissolution l'au moins une espèce d'un composé sélectionnée parmi les sels de bis(fluorosulfonyl)imide, représentés par la formule (1) dans un composant de formation de film de revêtement ayant une structure polyolique,
dans lequel, après l'étape d'isolation, une solution aqueuse contenant 1 % en masse d'au moins une espèce d'une composé sélectionnée parmi les sels de bis(fluorosulfonyl)imide représentés par la formule (1) présente un pH de 5,0 ou plus élevé et inférieur à 6,0.

12. Procédé pour la production l'agent de formation de film de revêtement conducteur selon la revendication 11, comprenant en outre : une étape de l'addition de la solution obtenue après l'étape de dissolution à une ou à une combinaison de deux ou plusieurs espèces de l'eau, un solvant organique, un monomère polymérisable, un prépolymère, un oligomère et un polymère.

13. Article moulé **caractérisé par le fait qu'**un film de revêtement produit de l'agent de formation de film de revêtement conducteur selon l'une des revendications 1 à 10 est formé.

14. Adhésive sensible à la pression, dans lequel l'agent de formation de film de revêtement conducteur selon la revendication 10 est utilisé en tant qu'une matière brute.
